# EUROPEAN PATENT APPLICATION

(11) **EP 4 697 218 A1**
(43) Date of publication of application: **18.02.2026**
(21) Application number: 24194723.3
(22) Date of filing: 15.08.2024
(51) Int. Cl.: G06F 21/62, H04L 9/40

(54) **METHOD FOR PROCESSING BROWSING DATA IN A SERVER APPLICATION**

(71) Applicant: Ad-IP GmbH & Co. KG, 40789 Monheim a. Rhein (DE)
(72) Inventor: OVERELL, Simon Ernest, Hertfordshire, SG5 1SS (US)
(74) Representative: Patentanwälte Bauer Vorberg Kayser

(57) **Abstract**

The invention relates to a method for processing browsing data in a server application (5a, b). The method is characterized in that the server application (5a, b) is running in a trusted execution environment (6a, b) on a TEE-server (1a, b), that the server application (5a, b) generates at least one key pair (9a, b) for asymmetric encryption, that each key pair (9a, b) comprises a public key (10a, b) and a private key (11a, b), that the server application (5a-b) transmits the at least one public key (10a, b) to a telemetry application (7a-c) on a telemetry server (3a-c), that the server application (5a, b) receives a plurality of encrypted browsing information data sets (12a-d), which encrypted browsing information data sets (12a-d) comprise internet domain visit statistics (13a-d) for a respective browser (8a-d) of a plurality of browsers (8a-d) running on a respective client device (2a-d) for a plurality of internet domains, that each encrypted browsing information data set (12a-d) is asymmetrically encrypted with a respective public key (10a, b) of the at least one key pair (9a, b), that the server application (5a, b) decrypts each encrypted browsing information data set (12a-d) with a respective private key (11a, b) of the at least one key pair (9a, b), that the server application (5a, b) aggregates data from the decrypted browsing information data sets (12a-d) and that the server application (5a, b) transmits the aggregated data (14a, b) to a data warehouse server (4). The invention also relates to a method for providing browsing data from a browser, to a computer program product, to a method for providing browsing data to a data warehouse server, to a server, to a client and to a system for providing browsing data to a warehouse server.

## Description

The invention is directed at a method for processing browsing data in a server application with the features of the preamble of claim 1, at a method for providing browsing data from a browser with the features of the preamble of claim 7, at a computer program product with the features of the preamble of claim 12, at a method for providing browsing data to a warehouse server with the features of the preamble of claim 13, at a server with the features of the preamble of claim 15, at a client with the features of the preamble of claim 16 and at a system for providing browsing data with the features of the preamble of claim 17.

It is of economic importance to track internet browsing data. For economically evaluating internet ads, not only the number of page impressions, ad views and ad viewing duration is important, but it is also valuable to know what correlations exist between the various ad views of a given client. All in all, there is a variety of information to be garnered from browsing data which is of economic value.

On the other hand, there are security risks as well as privacy risks associated with tracking data that can be used to identify specific individuals associated with that data. The use of aggregated data rather than raw data permits to reap the economic benefits of that data while avoiding the security risks and privacy risks associated with raw browsing data. However, certain risks remain when the raw data is obtained and processed as basis for the aggregated data.

Therefore, the object of the invention is to enable the generation of aggregated browsing data while at the same time minimizing the security and privacy risks incurred when tracking and processing raw browsing data.

With respect to a method for processing browsing data in a server application with the features of the preamble of claim 1, the object of the invention is achieved through a method for processing browsing data in a server application with the features of the characterizing part of claim 1. With respect to a method for providing browsing data from a browser with the features of the preamble of claim 7, the object of the invention is achieved through a method for providing browsing data from a browser with the features of the characterizing part of claim 7. With respect to a computer program product with the features of the preamble of claim 12, the object of the invention is achieved through a computer program product with the features of the characterizing part of claim 12. With respect to a method for providing browsing data to a warehouse server with the features of the preamble of claim 13, the object of the invention is achieved through a method for providing browsing data to a warehouse server with the features of the characterizing part of claim 13. With respect to a server with the features of the preamble of claim 15, the object of the invention is achieved through a server with the features of the characterizing part of claim 15. With respect to a client with the features of the preamble of claim 16, the object of the invention is achieved through a client with the features of the characterizing part of claim 16. With respect to a system for providing browsing data with the features of the preamble of claim 17, the object of the invention is achieved through a system for providing browsing data with the features of the characterizing part of claim 17.

The invention is based on the recognition that the use of telemetry servers as an in-between the browsers, from which internet domain visit statistics are to be collected, on the one hand and the servers with the trusted execution environments on the other hand has unexpected benefits. Firstly, this approach permit scaling up the telemetry servers independently from the TEE-servers. The telemetry servers do not need special security features, since they never handle unen-crypted data, thus reducing costs. For load balancing purposes, even a content delivery network could be used as needed. The telemetry servers can also easily be used to temporarily store data the encrypted data if a spike of such data is received from the browsers. The analysis of the data is usually not time-critical at all. Secondly, this approach permits firewalling off the TEE-servers, e.g. by closing of all ports and the like, which in turn increases the security of the unen-crypted data.

It has further been found that the apparent drawback of this approach is acceptable. In particular, having a telemetry server as in-between as just described prevents the client device from being able to attest the TEE-server and its software. This makes the system semi-private rather than private. Yet if and when this somewhat reduced level of privacy is accepted, it also permits to rely on a browser extension module like a plug-in for the software on the client side. For such a browser extension module, often implemented in JavaScript, such attesting the TEE-server is not possible or only very difficult to implement. But if the option of such attesting is already dropped due to the use of the telemetry servers, then browser extension modules may be used without additional drawbacks.

The method for processing browsing data in a server application according to the invention is characterized in that the server application is running in a trusted execution environment on a TEE-server, that the server application generates at least one key pair for asymmetric encryption, that each key pair comprises a public key and a private key, and that the server application transmits the at least one public key to a telemetry application on a telemetry server.

A trusted execution environment (TEE) is a secure processing area such that the code and data within is protected with respect to unauthorized read access from outside and with respect to unauthorized manipulation. The TEE-server in the present context may be any kind of server with such a trusted execution environment. Preferably, the trusted execution environment runs as an entire operating system in an enclave. This permit running normal code in the trusted execution environment rather than having to compile code specifically for the trusted execution environment.

The telemetry server may also be in principle any kind of server. Preferably, the at least one public key is transmitted to the telemetry application via the internet. In one preferred embodiment, the telemetry server and the TEE-server are communicating via the internet. In a further preferred embodiment, the telemetry server and the TEE-server are comprised by the same public cloud environment. Preferably, that cloud environment restricts ingress to the TEE-server to the telemetry server and egress to a data warehouse server. Thus, public internet access to the TEE-server is disabled. In particular, access to the TEE-server via the secure shell protocol (SSH) or via terminal access, such as via telnet, is disabled. The data warehouse server will be described in further detail below. It is further preferred that the all the ports of the TEE-server are closed.

The method for processing browsing data in a server application according to the invention is further characterized in that the server application receives a plurality of encrypted browsing information data sets, which encrypted browsing information data sets comprise internet domain visit statistics for a respective browser of a plurality of browsers running on a respective client device for a plurality of internet domains. Browser here means web browser software for accessing web sites of the world wide web. Preferably, the server application receives the plurality of encrypted browsing information data sets from the telemetry application.

In other words, each encrypted browsing information data set comprises information relating to internet domains visited for a particular browser out of a plurality of such browsers. It is to be noted that this plurality of browsers may or may not be the same kind of browser. Thus, the plurality of browsers may comprise a plurality of instances of the same kind of browser, e.g. browsers of the same build, or it may comprise different kinds of browsers, e.g. internet browsers of different vendors. The respective client devices may be different kinds of client devices and in particular any kind of device on which a browser may run. Preferably, it is preferred that the server application transmits the aggregated data to a data warehouse server via the internet.

The method of processing browsing data in a server application according to the invention is still further characterized in that each encrypted browsing information data set is asymmetrically encrypted with a respective public key of the at least one key pair. It is to be noted that, in principle, more than one browsing information data set may be encrypted with the same public key. It may also be that each browsing information data set is encrypted with a different public key.

The method of processing browsing data in a server application according to the invention is also characterized in that the server application decrypts each encrypted browsing information data set with a respective private key of the at least one key pair, that the server application aggregates data from the decrypted browsing application data sets and that the server application transmits the aggregated data to a data warehouse server. In particular, the server application aggregates data from the decrypted browsing application data sets such that the aggregated data is based on the browsing information data sets of multiple browsers. In other words, the aggregated data incorporates data from multiple browsers, which improves the security and privacy benefits of aggregation.

It is preferred that the server application aggregates data from the decrypted browsing application data sets only according to at least one query compiled into code of the server application. In other words, no dynamic queries are received by the server application to change the way that the data from the decrypted browsing application data sets is aggregated.

The data that the server application aggregates, i.e. the data that forms the basis for the aggregation, may comprise the browsing information data, be identical to the browsing information data or may be based on the browsing information data. In other words, intermediate processing of the decrypted browsing information data sets may be performed prior to aggregation. Aggregating the data means that it is no longer possible or that it is at least significantly more difficult to associate the browsing information data with individual browsers or individual users of browsers. The data warehouse server may in principle be any kind of server distinct from the TEE-server.

A preferred embodiment of the method of processing browsing data in a server application according to the invention is characterized in that the server application aggregates data such that internet domain visit statistics are grouped together based on a respective geographical location of the client devices and/or based on a respective type of the browsers and/or based on a respective type of browser extension module. The browser is a browser running on the client device and the browser extension module is a browser extension module executed as part of the browser running on the client device.

In other words, the aggregated data permits distinguishing the internet domain statistics based on either the respective geographical location of the client devices or based on the respective application type of the browsers or browser extension modules. Both the grouping based on geographical location and the grouping based on application type may have in principle any kind of granularity. For example, the grouping based on geographical location may be based on countries, on metropolitan areas or on continents or similar regions. The grouping based on type of the browsers may be based on different companies providing of browsers, for example Opera vs Firefox vs Edge, or based on browsers on mobile devices vs browsers on desktop computers. It is further preferred that generating the aggregated data does not comprise shuffling the internet domain visit statistics.

A preferred embodiment of the method of processing browsing data in a server application according to the invention is characterized in that the aggregated data comprises for each of the plurality of internet domains information on an active user count, on a number of page impressions, on a page view duration, on a click-through-rate and/or on a number of ad impressions.

The active user count denotes the number of users who have visited the internet domain on two different days within a thirty-day period. The number of page impressions denotes the number a given top level page of the internet domain was presented or the number all top-level pages of the internet domain were presented to users. The page view duration denotes the time that a given page of the internet domain was viewed or the time that all pages of the internet domain were viewed by users. The click-through-rate denotes the number of ads of the internet domain clicked on divided by the number of times they were viewed. The number of ad impressions denotes the number of ads displayed on the internet domain to users.

According to a preferred embodiment of the method of processing browsing data in a server application according to the invention the server application adds probabilistic data to the aggregated data to enhance differential privacy. Such adding of probabilistic data makes it even more difficult to extract information about individual browsers or their respective users from the aggregate data. Preferably, the probabilistic data comprises or substantially consists of Laplacian noise.

According to a further preferred embodiment of the method of processing browsing data in a server application according to the invention aggregating the data from the decrypted browsing application data sets comprises calculating sums based on the decrypted browsing application data sets. A sum, for example of page impressions, may consist of summing the respective quantity among a plurality or among all browsers.

It is also preferred that aggregating the data from the decrypted browsing application data sets comprises calculating counts based on the decrypted browsing application data sets. A count may be a count of distinct active users or a count of the browsing application data sets used to arrive at the aggregated data.

Moreover, it is preferred that aggregating the data from the decrypted browsing application data sets comprises calculating hyperloglog data sketches based on the decrypted browsing application data sets.

A preferred embodiment of the method of processing browsing data in a server application according to the invention is characterized in that the server application receives multiple encrypted browsing information data sets for each respective browser and that the server application aggregates data from the decrypted multiple browsing information data sets before transmitting the aggregated data to the data warehouse server. In this way, the server application is able to collect a larger amount of data prior to aggregating it, which in turn enhances the security and privacy benefits of the aggregation.

A preferred embodiment of the method of processing browsing data in a server application according to the invention is characterized in that the at least one private key of the at least one key pair remains in the trusted execution environment. Any risk of the private keys being intercepted during a transmission across a network or being obtained while outside the trusted execution environment is thereby avoided.

A further preferred embodiment of the method of processing browsing data in a server application according to the invention is characterized in that the server application generates at least one key pair for asymmetric encryption and that the server applications transmits the at least one public key to a respective telemetry application of a plurality of telemetry applications on a respective telemetry server of a plurality of telemetry servers. Preferably, the server application distributes the at least one public key to a plurality of telemetry applications. In one preferred embodiment, the server application transmits a different public key to each telemetry application. In a further preferred embodiment, the server application transmits the same public key to each telemetry application.

A preferred embodiment of the method of processing browsing data in a server application according to the invention is characterized in that the server application periodically generates the at least one key pair for asymmetric encryption and that the server applications periodically transmits the at least one public keys to the respective telemetry application of the plurality of telemetry applications on the respective telemetry server of the plurality of telemetry servers. Thus, the at least one public key used by the telemetry servers is updated regularly.

According to a preferred embodiment of the method of processing browsing data in a server application according to the invention, the server application receives the plurality of encrypted browsing information data sets for the plurality of browsers. Thus, the server application receives encrypted browsing information data sets for more than one browser.

The computer program product for a computer comprising software code according to a first aspect is characterized in that when the software code is executed by a computer, it causes the computer to carry out the method steps of the method for processing browsing data in a server application according to the invention.

The method for providing browsing data from a browser according to the invention is characterized in that a browser extension module is being executed as part of a browser, which browser is running on a client device, that the browser extension module receives a public key from a telemetry application running on a telemetry server, that the browser extension module generates a browsing information data set, which browsing information data set comprises internet domain visit statistics for the browser for a plurality of internet domains. The client device may in principle be any kind of device such as a smart phone, mobile phone, tablet, laptop computer or desktop computer. The telemetry server may in principle be any kind of server. In principle, the internet domain visit statistics for the plurality of internet domains can be assigned to the at least one browsing information data set in an arbitrary way. Preferably, the communication between the client device and the telemetry application occurs via the internet.

The browser extension module may be a browser plug-in. The browser extension module may be provided in an executable format or as source code. Such source code may be interpreted as part of the running browser. It is preferred that the browser extension module is executed in a sandbox of the browser. This means that the browser extension module has only restricted access to operating system functionality. In particular, the browser extension module may comprise code in JavaScript. When sending or receiving any information or message, the browser extension module may make use of appropriate transmission functionalities of the browser of which it is a part.

The method for providing browsing data from a browser according to the invention is further characterized in that the browser extension module asymmetrically encrypts the browsing information data set with the public key and that the browser extension module transmits the encrypted browsing information data set to the telemetry application.

A preferred embodiment of the method for providing browsing data from a browser according to the invention is characterized in that the browser extension module transmits a key request to the telemetry application and receives the public key from the telemetry application in response to the key request. Sending the public key in response to a request improves the chances of preventing the sending of spoofed data to the telemetry application.

A further preferred embodiment of the method for providing browsing data from a browser according to the invention is characterized in that the browser extension module transmits a pre-message to the telemetry application at a predefined time prior to transmitting the key request to the telemetry application. In this way, it is possible to track the number of browser extension modules or browsers that are turned off between the transmission of the pre-message and the transmission of the key request.

In a preferred embodiment of the method for providing browsing data from a browser according to the invention, the browser extension module transmits a plurality of browsing information data sets to the telemetry application. Preferably, the browser extension module transmits the plurality of browsing information data sets to the telemetry application with a substantially regular transmission interval. For example, such a substantially regular transmission interval may be a daily transmission.

A further preferred embodiment of the method for providing browsing data from a browser according to the invention is characterized in that the browser extension module transmits a separate key request to the telemetry application for each encrypted browsing information data set to be transmitted to the telemetry application prior to transmitting the encrypted browsing information data set to the telemetry application, that the browser extension module receives a public key from the telemetry application in response to each key request. This ensures that the browser extension module always uses the currently valid public key for encryption.

According to a further preferred embodiment of the method for providing browsing data from a browser according to the invention, the browser extension module calculates a hash value based on the received public key and the browser extension module transmits the encrypted browsing information data set with the calculated hash value to the telemetry application. This hash value can be used by the telemetry application to route the encrypted browsing information data set to the appropriate TEE-server.

A preferred embodiment of the method for providing browsing data from a browser according to the invention is characterized in that the browser extension module transmits the encrypted browsing information data set to the telemetry application substantially once in a 24-hour period.

The computer program product for a computer comprising software code according to a second aspect is characterized in that when the software code is executed by a computer, it causes the computer to carry out the method steps of the method for providing browsing data from a browser according to the invention.

A preferred embodiment of the computer program product according to the second aspect is characterized in that the computer program product is a browser plug-in. In other word, the computer program product is a software component that can be dynamically added to a browser application, i.e. without recompilation of the browser application.

The method for providing browsing data to a data warehouse server according to the invention is characterized in that at least one server application running in a respective trusted execution environment on a respective TEE-server executes the method steps of the method for processing browsing data in a server application according to the invention and that at least one browser extension module being executed as part of a browser running on a respective client device executes the method steps of the method for providing browsing data from a browser according to the invention.

The method for providing browsing data to a data warehouse server according to the invention is further characterized in that a telemetry application is running on a telemetry server, that the telemetry application receives the at least one public key from the at least one server application and that the telemetry application transmits the at least one public key to a respective browser extension module of the at least one browser extension module.

The method for providing browsing data to a data warehouse server according to the invention is still further characterized in that the telemetry application receives the respective encrypted browsing information data sets from the at least one browser extension module and that the telemetry application transmits the encrypted browsing information data sets to a respective server application of the at least one server application.

A preferred embodiment of the method for providing browsing data to a data warehouse server according to the invention is characterized that the telemetry application receives a plurality of public keys from a plurality of server applications. In other words, several server applications may be providing the same telemetry application with public keys. The determination which public key is provided to which browser extension module may be made in a manner that is principally arbitrary.

A preferred embodiment of the method for providing browsing data to a data warehouse server according to the invention is characterized in that the telemetry application receives the respective calculated hash value with the respective encrypted browsing information data set and that the telemetry application selects a TEE-server to the server application of which to send the encrypted browsing information data sets based on the hash value received with that encrypted client browsing information data set. In this way, the telemetry application can route each browsing information data set to the appropriate TEE-server without having to decrypt any information from the client browsing information data sets. Thus, security remains ensured.

A further preferred embodiment of the method for providing browsing data to a data warehouse server according to the invention is characterized in that the telemetry application transmits the same public key to all respective browser extension modules of the at least one browser extension module until the telemetry application receives a new public key from the at least one server application. Thus, the same public key is used for all encryptions until that public key is updated.

The server according to the invention comprises a trusted execution environment and a server application running in the trusted execution environment and is characterized in that the server application is configured to generate at least one key pair for asymmetric encryption, that each key pair comprises a public key and a private key and that the server application is configured to transmit the at least one public key to a telemetry application running on a telemetry server.

The server according to the invention is further characterized in that the server application is configured to receive a plurality of encrypted browsing information data sets comprising internet domain visit statistics for a respective browser of a plurality of browsers running on a respective client device for a plurality of internet domains, that each encrypted browsing information data set is asymmetrically encrypted with a respective public key of the at least one key pair, that the server application is configured to decrypt each encrypted browsing application data set with a respective private key of the at least one key pair, that the server application is configured to aggregate data from the decrypted browsing application data sets and that the server application is configured to transmit the aggregated data to a data warehouse server.

The client according to the invention comprises a client device and a browser extension module executed as part of a browser, which browser is running on the client device and is characterized in that the browser extension module is configured to receive a public key from a telemetry server, that the browser extension module is configured to generate a browsing information data set, which browsing information data sets comprises internet domain visit statistics for the browser for a plurality of internet domains, that the browser extension module is configured to asymmetrically encrypt the browsing information data set with the public key and that the browser extension module is configured to transmit the encrypted browsing information data set to the telemetry application.

The system according to the invention is for providing browsing data to a warehouse server and characterized in that the system comprises at least one server according to the invention and at least one client according to the invention.

The system according to the invention is further characterized in that the system comprises a telemetry server, that a telemetry application is running on the telemetry server, that the telemetry application is configured to receive the at least one public key from the at least one server application, that the telemetry application is configured to transmit the at least one public key to a respective browser extension module of the at least one browser extension module, that the telemetry application is configured to receive the respective encrypted browsing information data sets from the at least one browser extension module and that the telemetry application is configured to transmit the encrypted browsing information data sets to a respective server application of the at least one server application.

Preferred embodiments, features, properties and advantages of the method for processing browsing data in a server application according to the invention, the method for providing browsing data from a browser according to the invention, the computer program product according to the invention, the method for providing browsing data to a data warehouse server according to the invention, the server according to the invention, the client according to the invention and the system according to the invention equally apply, either individually or in combination, to the respective other among the method for processing browsing data in a server application according to the invention, the method for providing browsing data from a browser according to the invention, the computer program product according to the invention, the method for providing browsing data to a data warehouse server according to the invention, the server according to the invention, the client according to the invention and the system according to the invention.

Further advantageous and preferred features are discussed in the following description with respect to the Figures. In the following it is shown in
- Fig. 1: a schematic view of a system according to the invention for carrying out an embodiment of the method according to the invention and
- Fig. 2: a schematic view of various steps executed in the system of Fig. 1.

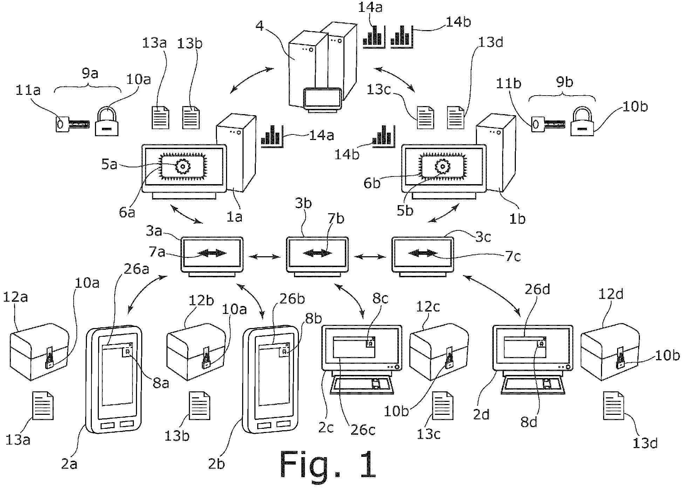

The system shown in Fig. 1 comprises two TEE-servers 1a, b, four client devices 2a-d, three telemetry servers 3a-c as well as a data warehouse server 4. On each of the TEE-servers 1a, b, a respective server application 5a, b is running in a trusted execution environment 6a, b.

On each telemetry server 3a-c, a respective telemetry application 7a-c is running. On each of the client devices 2a-d, of which in the present embodiment the first two client devices 2a, b are smart phones and the third and the fourth client devices 2c, d are desktop computers, a respective browser extension module 8a-d is running. In particular, the browser extension modules 8a-d are browser plug-ins for browsers 26a-d. Also shown in Fig. 1 are a total of two key pairs 9a, b with each key pair 9a, b comprising a respective public key 10a, b and a respective private key 11a, b. The first key pair 9a was generated by the first server application 5a whereas the second key pair 9b was generated by the second server application 5b.

The first server application 5a transmits the first public key 10a to the first telemetry application 7a on the first telemetry server 3a. The second server application 5b transmits the second public key 10b to the second telemetry application 7b on the second telemetry server 3b and to the third telemetry application 7c on the third telemetry server 3c.

From the first telemetry application 7a, the first public key 10a is then transmitted to the first browser extension module 8a and to the second browser extension module 8b. From the second telemetry application 7b, the second public key 10b is transmitted to the third browser extension module 8c. Moreover, from the third telemetry application 7c, the second public key 10b is transmitted to the fourth browser extension module 8d.

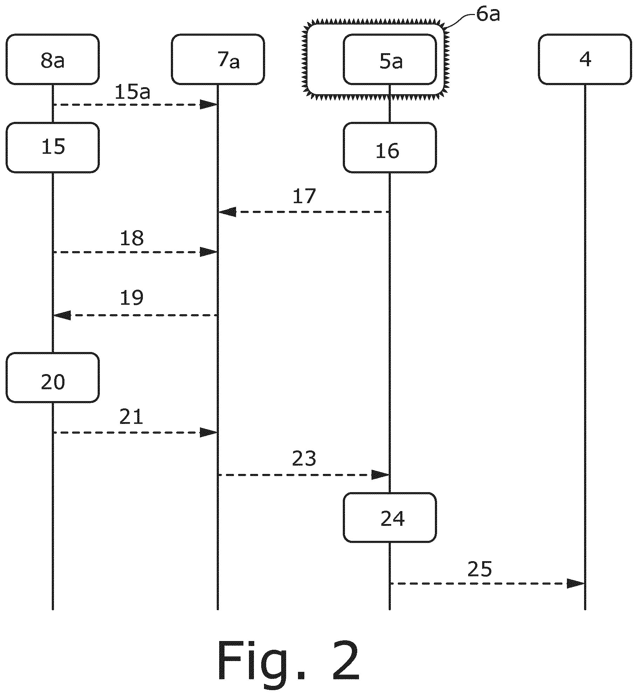

Each browser extension module 8a-d has browsing information data sets 12a-d that it has encrypted using the respective public key 10a, b that it received in the manner just described. The browsing information data sets 12a-d contain internet domain visit statistics 13a-d of the respective browsers 26a-d of which the browser extension module 9a-d is a part of. In a manner to be described in the context of Fig. 2 below, these encrypted browsing information data sets 12a-d have been transmitted to the respective server application 5a, b. The server applications 5a, b in turn have decrypted the browsing information data sets 12a-d to recover the internet domain visit statistics 13a-d using the appropriate private key 11a, b and then aggregated the data from the decrypted browsing information data sets 12a-d together with data from previously received browsing information data sets to obtain respective aggregated data 14a, b. The server applications 5a, b transmit the aggregated data 14a, b to the data warehouse server 4.

Fig. 2 describes the steps taken for a single browsing information data set 12a-d by way of illustration for an individual browser extension module, namely the first browser extension module 8a as shown in Fig. 1. It is understood that this process can be performed concurrently mutatis mutandis for any number of browser extension modules 8a-d.

In a first step, the first browser extension module 8a transmits a pre-message 15a to the first telemetry application 7a on the first telemetry server 3a. After the transmission of the pre-message 15a, the first browser extension module 8a performs the data collection step 15. During that data collection step 15, the first browser extension module 8a collects statistics about internet domain visits of the browser 26a of which it is a part for the duration of a data collection period. This data collection period may be either predefined or dynamic.

The first server application 5a running in the first trusted execution environment 6a on the first TEE-server 1a generates the first key pair 9a with the first public key 10a and the first private key 11a in a generating step 16. In the present example, this happens substantially concurrently to the data collection step 15. However, these two steps may also be situated differently with respect to each other temporally.

Subsequently, the server application 5a transmits the public key 10a to the first telemetry application 7a on the first telemetry server 3a with a public key telemetry transmission message 17.

When the first browser extension module 8a determines that the time has come to transmit the collected internet domain statistics, the first browser extension module 8a transmits a key request 18 to the first telemetry application 7a, which in turn transmits the first public key 10a to the first browser extension module 8a in response with a public key client transmission message 19.

Having thus received the first public key 10a, the first browser extension module 8a executes a client processing step 20. This client processing step 20 comprises the first browser extension module 8a generating the first browsing information data set 12a from the collected internet domain visit statistics 13a for the first browser 26a and then using the received first public key 10a to encrypt the first browsing information data set 12a, thereby generating the first encrypted browsing information data set 12a.

Subsequently, the first browser extension module 8a transmits the first encrypted browsing information data set 12a to the first telemetry application 7a in a telemetry data transmission message 21. In addition to the first encrypted browsing information data set 12a, the telemetry data transmission message 21 comprises a hash value that the first browser extension module 8a has calculated on the first public key 10a.

The first telemetry application 7a, having thus received the telemetry data transmission message 21, forwards the first encrypted browsing information data set 12a to the first server application 5a from which the first telemetry application 7a received the first public key 10a in a server data transmission message 23. The first telemetry application 7a is able to select the correct server application, namely the first server application 5a as well as, by extension, the correct TEE-server, namely the first TEE-server 1a, by matching the hash value from the telemetry data transmission message 21 with hash values that the first telemetry application 7a can calculate based on any public keys 10a, b received from any of the server applications 5a-d before they were forwarded to the browser extension modules 8a-d.

Since the first private key 11a did not leave the first trusted execution environment 6a in any way, neither the first telemetry application 7a nor any other application on the first telemetry server 3a or on any server except the first TEE-server 1a is able to decrypt the first encrypted browsing data set 12a, even if the server data transmission message 23 or the telemetry data transmission message 21 were intercepted.

Having received the server data transmission message 23, the first server application 5a executes an aggregation step 24. In that aggregation step 24, the first server application 5a uses the first private key 11a to decrypt the first encrypted browsing data set 12a received with the server data transmission message 23. Data from the decrypted first browsing data set 12a is aggregated together with data from previously received and decrypted browsing data sets.

In this particular example, a total of five browsing data sets have been received by the first server application 5a. Parts of the browsing data sets have the following data:
{user _id: abc, date: 2024-07-01, sessions: 4, page_impressions: 15}
{user _id: abc, date: 2024-07-02, sessions: 5, page_impressions: 20}
{user _id: abc, date: 2024-07-03, sessions: 6, page_impressions: 25}
{user_id: xyz, date: 2024-07-01, sessions: 5, page_impressions: 10}
{user_id: xyz, date: 2024-07-02, sessions: 6, page_impressions: 15}

When aggregating this data, the count of active users is 2 because there are 2 distinct users "abc" and "xyz". The sum of the number of page impressions would be 15+20+25+10+15 = 85. The count of the number of page impressions would be length of the list [15,20,25,10,15] and therefore equal to 5.

Also, a derived value such as the mean of the number of page impressions per data set is calculated, resulting in 85 / 5 = 17.

The aggregation step 24 also comprises the first server application 5a adding probabilistic data to the first aggregated data 14a obtained in the aggregation step 24.

On receipt of those previously received browsing data sets, no aggregate data was sent to the data warehouse server 4. Now with receipt and decryption of the present browsing data set 12a, a predefined condition such as a number of received browsing data sets 12a for transmission of the first aggregated data 14a has been reached. The first server application 5a therefore transmits the resulting first aggregated data 14a to the data warehouse server 4 in a warehouse data transmission message 25.

## Claims

1. Method for processing browsing data in a server application (5a, b), **characterized in that** the server application (5a, b) is running in a trusted execution environment (6a, b) on a TEE-server (1a, b), that the server application (5a, b) generates at least one key pair (9a, b) for asymmetric encryption, that each key pair (9a, b) comprises a public key (10a, b) and a private key (11a, b), that the server application (5a-b) transmits the at least one public key (10a, b) to a telemetry application (7a-c) on a telemetry server (3a-c), that the server application (5a, b) receives a plurality of encrypted browsing information data sets (12a-d), which encrypted browsing information data sets (12a-d) comprise internet domain visit statistics (13a-d) for a respective browser (8a-d) of a plurality of browsers (8a-d) running on a respective client device (2a-d) for a plurality of internet domains, that each encrypted browsing information data set (12a-d) is asymmetrically encrypted with a respective public key (10a, b) of the at least one key pair (9a, b), that the server application (5a, b) decrypts each encrypted browsing information data set (12a-d) with a respective private key (11a, b) of the at least one key pair (9a, b), that the server application (5a, b) aggregates data from the decrypted browsing information data sets (12a-d) and that the server application (5a, b) transmits the aggregated data (14a, b) to a data warehouse server (4).

2. Method according to claim 1, **characterized in that** the server application (5a-b) aggregates data such that internet domain visit statistics are grouped together based on a respective geographical location of the client devices (8a-d) and/or based on a respective application type of the client applications (8a-d).

3. Method according to claim 1 or 2, **characterized in that** the aggregated data (14a, b) comprises for each of the plurality of internet domains information on an active user count, on a number of page impressions, on a page view duration and/or on a number of ad impressions.

4. Method according to one of claims 1 to 3, **characterized in that** the server application (5a, b) adds probabilistic data, preferably Laplacian noise, to the aggregated data (14a, b) to enhance differential privacy.

5. Method according to one of claims 1 to 4, **characterized in that** aggregating the data (14a, b) from the decrypted browsing application data sets (12a-d) comprises calculating sums, calculating counts and/or calculating hyperloglog data sketches based on the decrypted browsing application data sets (12a-d).

6. Method according to one of claims 1 to 5, **characterized in that** the private keys (11a, b) of the at least one key pair (9a, b) remain in the trusted execution environment (6a-b).

7. Method for providing browsing data from a browser (8a-d), **characterized in that** a browser extension module is being executed as part of a browser (8a-d), which browser is running on a client device (2a-d), that the browser extension module (8a-d) receives a public key (10a, b) from a telemetry application (7a-c) running on a telemetry server (3a-c), that the browser extension module (8a-d) generates a browsing information data set (12a-d), which client browsing information data set (12a-d) comprises internet domain visit statistics (13a-d) for the browser (8a-d) for a plurality of internet domains, that the browser extension module (8a-d) asymmetrically encrypts the browsing information data set (12a-d) with the public key (10aa, b) and that the browser extension module (8a-d) transmits the encrypted browsing information data set (12a-d) to the telemetry application (7a-c).

8. Method according to claim 8, **characterized in that** the browser extension module (8a-d) transmits a key request (18) to the telemetry application (7a-c) and receives the public key (10a, b) from the telemetry application (7a-c) in response to the key request (18).

9. Method according to claim 9, **characterized in that** the browser extension module (8a-d) transmits a plurality of browsing information data sets (12a-d), preferably with a substantially regular transmission interval, to the telemetry application (7a-c).

10. Method according to claim 10, **characterized in that** the browser extension module (8a-d) transmits a separate key request (18) to the telemetry application (7a-c) for each encrypted browsing information data set (12a-d) to be transmitted to the telemetry application (7a-c) prior to transmitting the encrypted browsing information data set (12a-d) to the telemetry application (7a-c), that the browser extension module (8a) receives a public key (10a, b) from the telemetry application (7a-c) in response to each key request (18), preferably, that each public key (10a, b) is used for encrypting only one client browsing information data set (12a-d).

11. Method according to one of claims 8 to 11, **characterized in that** the browser extension module (8a-d) calculates a hash value based on the received public key (10a, b) and that the browser extension module (8a-d) transmits the encrypted browsing data set (12a-d) with the calculated hash value to the telemetry application (7a-c).

12. Computer program product for a computer comprising software code **characterized in that**, when the software code is executed by a computer, it causes the computer to carry out the method steps according to any of claims 1 to 11.

13. Method for providing browsing data to a data warehouse server (4), **characterized in that** at least one server application (5a-b) running in a respective trusted execution environment (6a, b) on a respective TEE-server (1a, b) executes the method steps of the method according to one of claims 1 to 6, that at least one browser extension module (8a-d) being executed as part of a browser running on a respective client device (2a-d) executes the method steps of the method according to one of claims 7 to 11, that a telemetry application (7a-c) is running on a telemetry server (3a-c), that the telemetry application (7a-c) receives the at least one public key (10a, b) from the at least one server application (5a-b), that the telemetry application (7a-c) transmits the at least one public key (10a, b) to a respective browser extension module (8a-d) of the at least one browser extension module (8a-d), that the telemetry application (7a-c) receives the respective encrypted browsing information data sets (12a-d) from the at least one browser extension module (8a-d) and that the telemetry application (7a-c) transmits the encrypted browsing information data sets (12a-d) to a respective server application (5a,b) of the at least one server application (5a,b).

14. Method according to claim 13, **characterized in that** the telemetry application (7a-c) receives the respective calculated hash value with the respective encrypted browsing information data set (12a-d) and that the telemetry application (7a-c) selects a TEE-server (1a, b) to the server application (5a, b) of which to send the encrypted browsing information data sets (12a-d) based on the hash value received with that encrypted client browsing information data set (12a-d).

15. Server with a trusted execution environment (6a, b) and a server application (5a, b) running in the trusted execution environment (6a, b), **characterized in that** the server application (5a, b) is configured to generate at least one key pair (9a, b) for asymmetric encryption, that each key pair (9a, b) comprises a public key (10a, b) and a private key (11a, b), that the server application (5a, b) is configured to transmit the at least one public key (10a-d) to a telemetry application (7a-c) running on a telemetry server (3a-c), that the server application (5a, b) is configured to receive a plurality of encrypted browsing information data sets (12a-d) comprising internet domain visit statistics (13a-d) for a respective browser (8a-d) of a plurality of browsers (8a-d) running on a respective client device (2a-d) for a plurality of internet domains, that each encrypted browsing information data set (12a-d) is asymmetrically encrypted with a respective public key (10a, b) of the at least one key pair (9a, b), that the server application (5a, b) is configured to decrypt each encrypted browsing application data set (12a-d) with a respective private key (11a, b) of the at least one key pair (9a, b), that the server application (5a-b) is configured to aggregate data from the decrypted browsing application data sets (12a-d) and that the server application (5a, b) is configured to transmit the aggregated data (14a-b) to a data warehouse server (4).

16. Client with a client device (2a-d) and a browser extension module being executed as part of a browser (8a-d), which browser is running on the client device (2a-d), **characterized in that** the browser extension module (8a-d) is configured to receive a public key (10a, b) from a telemetry application (7a-c) running on a telemetry server (3a-c), that the browser extension module (8a-d) is configured to generate a browsing information data set (12a-d), which client browsing information data set (12a-d) comprises internet domain visit statistics (13a-d) for the browser (8a-d) for a plurality of internet domains, that the browser extension module (8a-d) is configured to asymmetrically encrypt the browsing information data set (12a-d) with the public key (10a, b) and that the browser extension module (8a-d) is configured to transmit the encrypted browsing information data set (12a-d) to the telemetry application (7a-c).

17. System for providing browsing data to a warehouse server (4), **characterized in that** the system comprises at least one server according to claim 17, that the system comprises at least one client according to claim 18, that the system further comprises a telemetry server (3a-c), that a telemetry application (7a-c) is running on the telemetry server (3a-c), that the telemetry application (7a-c) is configured to receive the at least one public key from (10a-d) the at least one server application (5a-b), that the telemetry application (7a-c) is configured to transmit the at least one public key (10a, b) to a respective browser extension module (8a-d) of the at least one browser extension module (8a-d), that the telemetry application (7a-c) is configured to receive the respective encrypted browsing information data sets (12a-d) from the at least one browser extension module (8a-d) and that the telemetry application (7a-c) is configured to transmit the encrypted browsing information data sets (12a-d) to a respective server application (5a, b) of the at least one server application (5a, b).
